Europäisches Patentamt

European Patent Office

Office européen des brevets

(11) Publication number: **0 331 648**
A2

(12) **EUROPEAN PATENT APPLICATION**

(21) Application number: **89830075.1**

(22) Date of filing: **24.02.89**

(51) Int. Cl.⁴: **B 32 B 17/10**
**C 03 C 27/12**

(30) Priority: **04.03.88 IT 1243288    10.01.89 IT 1240389**

(43) Date of publication of application:
**06.09.89   Bulletin   89/36**

(84) Designated Contracting States: **DE FR GB**

(71) Applicant: **Borgna, Attilio**
**Via Cavour 99/101**
**I-12011 Borgo San Dalmazzo CN  (IT)**

(72) Inventor: **Borgna, Attilio**
**Via Cavour 99/101**
**I-12011 Borgo San Dalmazzo CN  (IT)**

(74) Representative: **Galletti di San Cataldo, Vettor, Dr.**
**Via XX Settembre 36**
**I-16121 Genova  (IT)**

A request for correction of the description has been filed pursuant to Rule 88 EPC. A decision on the request will be taken during the proceedings before the Examining Division (Guidelines for Examination in the EPO, A-V, 2.2).

(54) **Process for manufacturing laminated glass.**

(57) This invention refers to a process for manufacturing laminated glass consisting of at least two sheets of glass with a layer of adhesive between them, preferably consisting of polyvinyl butyral.

According to the invention a single heating stage in a vacuum is envisaged, implemented inside a flexible container such as a bag, airtight and connected to a source of vacuum.

FIG.4

## Description

## Process for manufacturing laminated glass

The subject-matter of this invention is a process for manufacturing laminated glass.

The term laminated glass is understood to mean a product consisting of two or more layers of glass, of the same or different thicknesses, bonded together by means of plastic materials.

The most commonly used plastic material for interpolation, and to which reference will be made herein, is PVB (Polyvinyl Butyral).

Two main methods are known and used for manufacturing laminated glass:

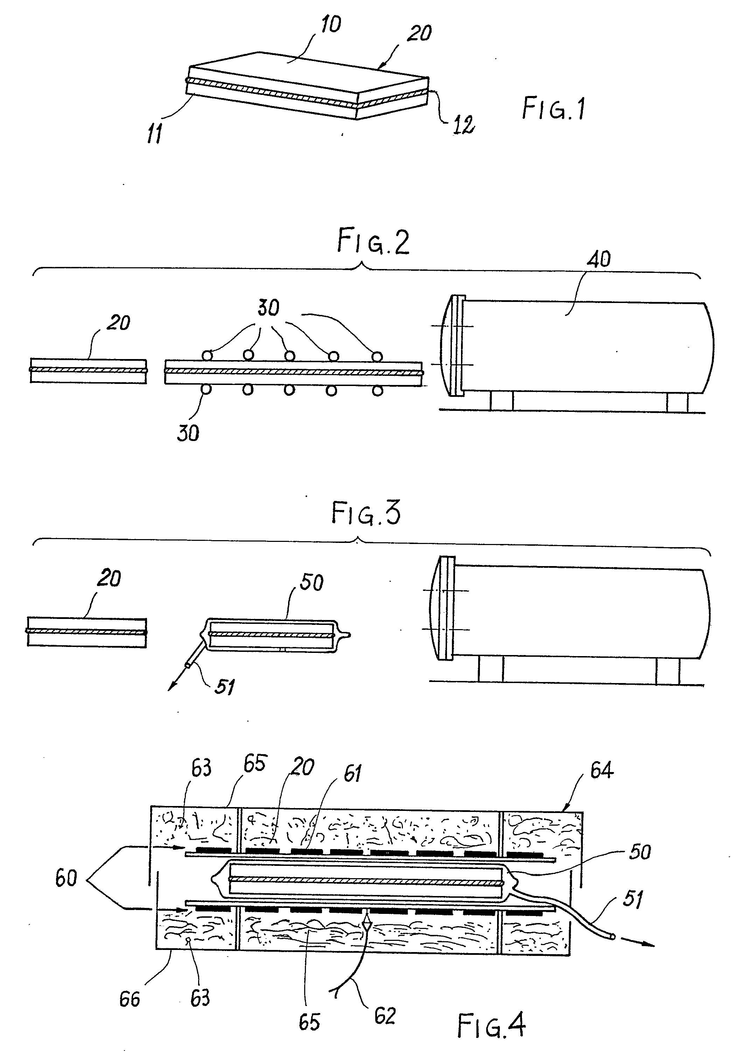

(A) According to the first of these known processes, two perfectly clean sheets of glass are coupled, placing a sheet of PVB between them as illustrated in figure 1.

This sandwich then undergoes a first calendering, which consists of passing it through pairs of rollers which squeeze the two layers of glass against each other so as to expel any air bubbles caught in the sandwich while it was being assembled.

During calendering the sandwich is heated to about 100-120°C, and is then allowed to cool so that when it leaves the rollers its temperature is about 60-90°C.

During the second stage of said known process, the sandwich is placed inside an autoclave.

The working conditions of the autoclave are the following:

Temperature: 130-150°C

Pressure: about 8 bars

This first process is schematically represented in figure 2.

The second known process also consists of two consecutive stages: in the first stage calendering is replaced by insertion of the sandwich inside an airtight bag which is then connected up to a vaccum pump.

The second stage again consists of an autoclave treatment at approximately the same conditions mentioned for the first known process.

This second known process is schematically illustrated in figure 3.

As can be seen, the two known processes are equivalent: in the second process the atmospheric pressure replaces the mechanical action of the calendering rollers.

The second known system, using the bag, is preferred for products of a certain value but being expensive it not widely used.

The bag may be disposable or reusable.

Heating of the sandwich contained in the bag is generally done in hot-air furnaces in which several sandwiches can be treated simultaneously.

The main drawback of the two known processes is that of the presence of the autoclave which, being expensive in itself, is justified only for large-scale production.

Another drawback is the fact that the process takes place in two stages, the second of which envisages placing the various sandwiches in the autoclave and taking them out again afterwards. This requires very careful handling because of the nature of the material being treated.

The purpose of this invention is to overcome these drawbacks, and indeed on the one hand it allows the autoclave to be eliminated, which definitely reduces the cost of the system, while on the other hand it eliminates handling of the sandwiches from the beginning to the end of the process, leading also to considerable energy savings.

According to the invention, the process takes place in one stage with programmed heating and at a programmed pressure, and handling the sandwiches only once, without any need for an autoclave.

According to a variant of the embodiment, it is possible on the one hand to improve the quality of the end product, and on the other to make the process more economical both by reducing the times and by saving energy.

An important factor in the manufacture of laminated glass is the moisture content of the PVB (Polyvinyl Butyral) used, as this determines the strength of the bond and the formation or otherwise of air bubbles during the gluing process.

Generally speaking, the product supplied by PVB manufacturers has a well-defined hygrometric value and is contained in sealed and cooled containers. For mass-production purposes, therefore, the product may be used as it is, with no further treatment, as long as the environment is conditioned for a low moisture content.

The process according to this invention may also be applied to small-scale production.

This type of production does however entail storage problems of the plastic material in sheet form and there fore its use in conditions which are not the optimum as far as concerns its moisture content. In order to overcome these problems, it is necessary to dehumidify the PVB in a suitable dehumidification chamber to ensure that it has the correct hygrometric value at the time of use.

This chamber may consist of a metal container kept at an internal temperature of 20/25°C and a relative humidity of 25/30% by using hygroscopic salts (silica gel or molecular screens).

The PVB sheets are hung in the chamber for at least 24 hours before being removed just before assembly.

This system has given good results so far, allowing the PVB to be stored even in fairly damp environments.

There are however two types of problems.

The first is that the material must be prepared well ahead of time.

The second is that the hygroscopic salts must be dried periodically.

According to the variant of the embodiment of this invention, it is possible to overcome these problems simplifying the necessary drying operations.

For this purposes the sheets of plastic material are placed inside a special furnace at which they are kept for about 60 minutes at a temperature of 70°C more or less 2°C. Surprisingly, it has been found that even with varying initial moisture contents, the final moisture content is practically constant.

Yet another feature of this preferred embodiment of the invention consists of the fact that after preparing the sandwich and placing it inside the flexible container and after having created a vacuum around it, the whole unit is moved to an oven for heating as required.

Here, within 20 to 30 minutes, a temperature of 120-130°C is reached.

Having completed this first heating stage, the atmospheric pressure is restored inside the container, and heating is continued up to 140-150°C.

The sandwich is kept at the maximum heating temperature for 15 to 45 minutes and is then removed from the oven and heated in air.

Contrarily to expectations, it has been found that by eliminating the vacuum during heating, once the temperature of 120-130° has been reached, the quality of the product remains constant, indeed it improves, since the crushing phenomena of the edges of the sheets of glass of the sandwich leading to small leaks of melted PVB are eliminated.

The basic characteristics of the invention are summarized and schematically illustrated in the claims, and the subject-matter and advantages are also explained in the following description referred to forms of embodiment chosen by way of example only, with specific reference to the attached drawings, in which:

- figure 1 shows schematically a multilayered sheet of glass obtainable by the process according to the invention;

- figures 2 and 3 show schematically the two known processes described in the introductory part of this description;

- figure 4 is a cross-section of a heat-insulated container fitted with heating and depressurizing equipment, suitable for the process according to the invention;

- figure 5 shows schematically the perfected process according to this invention;

- figure 6 shows a perspective view of the drying oven for the sheets of plastic material (PVB).

With particular reference to figures 1 to 3, 10 and 11 refer to the two sheets of glass of the sandwich while 12 indicates the sheet of PVB.

The sandwich formed in this way, indicated as a whole by 20, according to the known process schematically illustrated in figure 2, is calendered in the roller conveyor 30, and during its progress is first heated up to a maximum of about 100-120°C and then allowed to cool down to about 60-90°.

During the calendering operation, any air bubbles present between the two facing surfaces of the two sheets of glass and the layer of PVB are expelled by effect of the squeezing action of the rollers 30.

Subsequently the sandwich 20 is put inside the autoclave 40, where it is subjected to the temperature and pressure conditions indicated above.

Figure 3 shows an airtight bag 50 connected by the duct 51 to a vacuum pump not shown in the drawing. In this second known process the squeezing action of the rollers 30 is replaced by the atmospheric pressure acting on the outer surface of the bag 50.

The heat treatment to which the sandwich 20 is subjected inside the bag 50 is approximately the same as the heat treatment envisaged by the known process schematically illustrated in figure 2.

It is worthwhile stressing the fact that according to both known processes high pressure values up to about 8 bars appear to be necessary in the final consolidation process of the sandwich, and these which can be achieved only using an autoclave.

Furthermore, according to these known processes, the sandwich has to undergo a double heating cycle, obviously entailing energy consumption.

According to this invention it is possible to manufacture the sandwiches using atmospheric pressure only, that is to say without using an autoclave.

Additionally, the sandwich is subjected to one heating cycle only.

According to this invention, the sandwich 20 is placed inside the airtight bag, in which a vacuum is then created. At the same time, its temperature is progressively raised up to 140-150°C, keeping the sandwich in a vacuum. In these conditions it has been found, surprisingly, that atmospheric pressure is sufficient to guarantee a perfect bond between the two sheets of glass.

It is however important that the temperature be kept uniform throughout the whole piece 20, with tolerances preferably lower than 1°C.

The material of which the bag is made must of course be capable of remaining airtight at temperatures exceeding 150°C. For example silicone rubber allowing working temperatures up to 210°C may be used for the bag.

As far as concerns the times needed to complete gluing of the sandwich, the temperature rise can be relatively fast, compatibly with the power of the heating equipment, and keeping in mind that the temperature variations between one point and another of the sandwich must be kept to a minimum.

One device suitable for the process according to the invention, in a preferred form of embodiment, has two metal plates 60, made for example of aluminium, resting against the two sides of the bag 50 containing the sandwich 20.

These plates 60 are heated by a large number of electrical resistances 61, arranged over the outer surfaces of the aluminium plates.

The temperature of the plates can be controlled by thermocouples 62 and heat losses can be avoided by using a suitable insulated covering 63.

A metal casing 64 made of two half-shells 65 and 66 completes the device in question.

Preferably, each half-shell is joined solidly to one of the two plates 60 and to the appropriate heating resistances.

The casing 64 can be sized to allow the treatment of a single sandwich or several pieces together.

Of course, although the vacuum bag must be always be used, the heat cycle envisaged by the process according to the invention can also be achieved in other ways, for example using hot-air furnaces. In this case too, however, it is necessary to ensure distribution of the temperatures so as to avoid differences of more than about 1°C, as already mentioned.

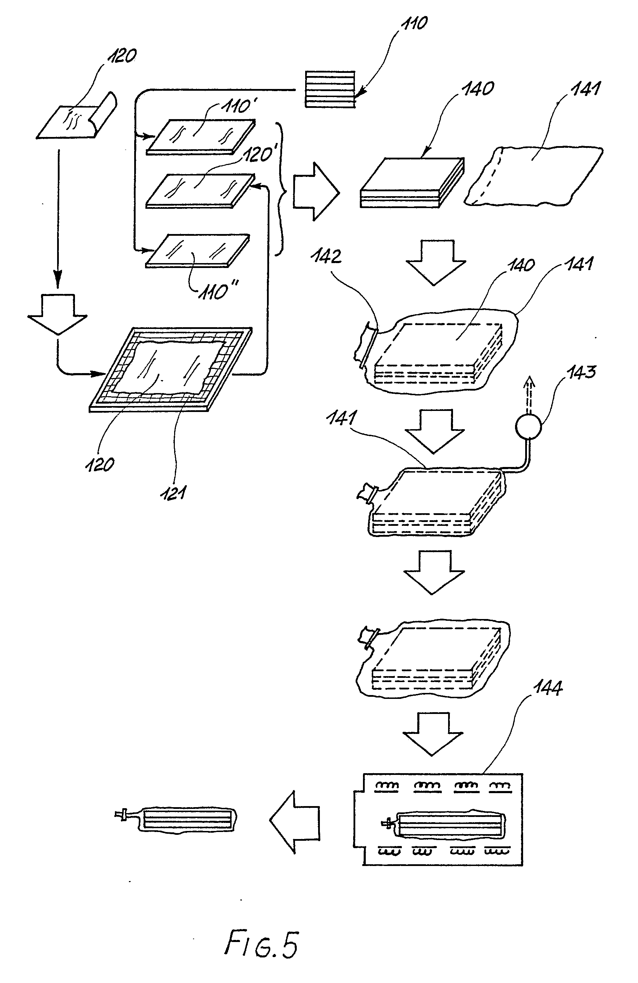

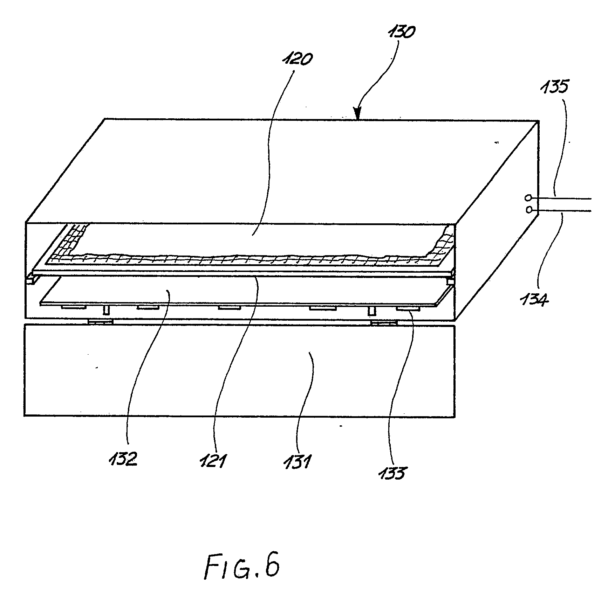

With particular reference to figures 5 and 6, relating to a specific preferred form of embodiment of the process, 10 indicates a pile of glass sheets to be made into a sandwich, that is to say to be alternated with sheets of plastic material 20, consisting of Polyvinyl Butyral (PVB).

In the example described below, the sandwich consists of two sheets of glass 10' and 10" and of a single sheet of plastic material 20'.

The plastic material in sheet form is supplied by the manufacturers in sealed rolls having the required moisture content. In mass production, the roll of plastic material is used up within a relatively short time after opening, and therefore the moisture content remains practically unchanged between the time of opening the sealed roll and using it. In the case of small-scale production, on the other hand, after opening the seal roll of plastic material in sheet form, this may be kept until needed for use even for long periods, in storage places without controlled moisture conditions.

Consequently, before use each length of sheeting has to be subjected to a drying process, the duration of which is proportional to the duration of storage and to the moisture conditions in the place of storage. Generally speaking, this drying lasts at least twenty-four hours. According to this invention, the duration of the drying is reduced to about one hour, keeping the length of sheeting 20 at a temperature of 70°C, with a tolerance of 2°C more or less.

It was found, quite unexpectedly, that independently of the initial moisture content of the length of sheeting to be dried, the final moisture content is practically constant. It may therefore be presumed that at this temperature (70°C), once a certain stage of drying has been reached, the dehumidification process loses effectiveness after about one hour.

This means that the times needed in order to further dehumidify the plastic material would have to be one order of magnitude greater or higher temperatures would have to be used, which would not be acceptable as the plastic material would be modified.

It is therefore possible to use the two parameters stated above (one hour of drying at 70°C) for plastic materials in sheets having even very different initial moisture contents, and this behaviour remains the same even if the thickness of the sheeting varies, obviously within the limits for its use for making sandwiches of glass sheets. Therefore, according to this invention, the sheet of plastic material 120 is placed on a grille 121 and put inside a small drying over 130 illustrated in detail in figure 2.

On completion of drying, the sheet of plastic material 120 is placed between the two sheets of glass 110' and 110" and the sandwich 140 formed in this way is put inside a wrapper of flexible and airtight material 141 fitted with suitable means for sealing it 142.

This wrapper is then connected up to a vacuum pump 143 so as to obtain a pressure inside it of a few millimeters of' mercury. This causes the sheet of plastic material to be squeezed between the two sheets of glass. The squeezing is accompanied by the expulsion of any air bubbles caught in the sheet of plastic material or between the latter and the glass.

The wrapper and its contents are then taken, still with the vacuum inside, to a heating furnace 144, where their temperature is increased in 20-30 minutes up to 120-130°C. At this point atmospheric pressure is re-established inside the wrapper, while heating continues up to 140-150°C. The sandwich is kept at this temperature for a time comprised between 15 and 45 minutes.

Once this period of time has elapsed, the sandwich is removed from the furnace and allowed to cool in air.

According to this invention, therefore, the use of the heating furnace is optimized, since there are no idle times for slow heating or slow cooling of the sandwich. Figure 6 shows the drying oven 130, fitted with a tilting lid 131 to allow access and extraction of the grilles 121 for holding the sheet 120.

Inside the oven, under the grille 121 there is a metal heating plate, in turn heated by electrical resistances 133.

Figure 2 also shows the power supply cable 134 for the resistances 133 and the cable 135 leading away from a thermocouple, whose signal is used to control the temperature in the oven 130.

Since the sheet 120 remains inside the oven 130 for practically the same length of time needed to heat the sandwich 140, the oven 130 can be arranged underneath the sandwich-heating furnace, so that while one sandwich is being heated in the furnace, the sheet of plastic to be used for the next sandwich can be dried in the oven.

Of course the oven may be designed in such a way as to contain more than one frame 121, particularly if the sandwich is made up of more than two sheets of glass. Although for descriptive reasons this invention is based on the above description and illustrations by way of example only, with particular reference to the attached drawings, many changes and variants to the embodiment of the invention may be envisaged.

For example, the process may be profitably applied to obtain sandwiches made of more than two sheets of glass, as well as to make curved sandwiches made of two or more sheets of glass. Finally the process may be used to make sandwiches made of sheets of normal or of tempered glass.

**Claims**

1. Process for manufacturing laminated glass consisting of at least two sheets of glass with a layer of adhesive between then preferably consisting of polyvinyl butyral, characterized in that the sandwich to be glued together is placed inside an airtight bag connected to a vacuum pump and the whole unit is heated up to 130-150°C at a constant pressure.

2. Process according to claim 1, characterized in that the sandwich must be heated in such a way that the temperature variations between one point and another of the sandwich must be kept lower than 1°C and preferably below 0.5°C.

3. Process according to claims 1 and 2 characterized by the fact that once the envisaged temperature has been reached, this must be maintained for about 15-45 minutes.

4. Device suitable for implementing the process according to the preceding claims characterized by the fact that it features an insulated casing, preferably made of two half-shells, having a pair of electrically heating metal plates, and capable of resting against the outer surfaces of the sandwich with the interpolation of the flexible wall of an airtight bag; in which said airtight bag is connected to the source of a vacuum.

5. Device according to claim 4, characterized in that the temperature of said metal plates, preferably made of aluminium, is controlled by thermocouples.

6. Process for manufacturing laminated glass in sandwiches, consisting of at least two sheets of glass, with a sheet of plastic material between them having the function of an adhesive and preferably consisting of polyvinyl butyral (PVB), in which the sandwich to be glued together is placed inside a flexible and airtight wrapper connected to a vacuum pump, and then the sandwich is heated up to 140-150°C and kept at this temperature for 15 to 45 minutes, according to the foregoing claims, and characterized by the fact that during heating, when a temperature between 120 and 130°C is reached, atmospheric pressure is re-established inside the wrapper containing the sandwich while heating continues.

7. Process according to the foregoing claim, characterized in that the period of depressurization of the sandwich, until a temperature of 120-130°C is reached, is about 20 to 30 minutes.

8. Process according to claims 6 and 7, characterized by the fact that the sheet of plastic material acting as an adhesive is dried at about 70°C for one hour before being inserted inside the sandwich.

9. Device for implementing the process according to claims 6 to 8, characterized in that it envisages a drying oven equipped with at least one heating plate and suitable supporting guides for at least one frame, preferably made of netting, used to support the sheet of plastic material to be dried.

FIG.1

FIG.2

FIG.3

FIG.4

FIG.5

FIG.6